# EUROPEAN PATENT APPLICATION

(11) **EP 3 467 781 A1**
(43) Date of publication of application: **10.04.2019**
(21) Application number: 17306343.9
(22) Date of filing: 06.10.2017
(51) Int. Cl.: G06T 17/00

(54) **A METHOD AND DEVICE FOR UP-SAMPLING A SET OF POINTS REPRESENTING A 3D SCENE**

(71) Applicant: Thomson Licensing, 92130 Issy-les-Moulineaux (FR)
(72) Inventor: LASSERRE, Sebastien, 35576 CESSON-SEVIGNE (FR); GUEDE, Celine, 35576 CESSON-SEVIGNE (FR); OLIVIER, Yannick, 35576 CESSON-SEVIGNE (FR)
(74) Representative: Huchet, Anne

(57) **Abstract**

The present principles a method and a device up-sampling a set of points representing a 3D scene, each point being associated with a node of a regular 3D grid. The method is characterized in that the method comprises, for each current point (Pi) associated with a node of said regular 3D grid:
- determining (210) if at least one neighbor point (NEI_{i,j}) is located in a neighborhood of a current point (Pi) of said set of points;
- for each of said at least one neighbor point (NEI_{i,j}), determining a new point (NPi,j) located at the middle of a segment joining said current point (Pi) and said neighbor point (NEI_{i,j}).

## Description

### 2. Field.

The present principles generally relate to up-sampling a set of points representing a 3D scene.

### 3. Background.

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

A set of points representing a 3D scene, also called a point cloud in the following, may be a set of points usually intended to represent the external surface of a 3D object but also more complex geometries like hair, fur that may not be represented efficiently by other data format like meshes. Each point of a point cloud is often defined by a 3D spatial location (*X, Y,* and *Z* coordinates in the 3D space) and possibly by other associated attributes such as color, represented in the RGB or YUV color space for example, a transparency, a reflectance, a two-component normal vector, etc.

A colored point cloud may be a set of 6-components points (X, Y, Z, R, G, B) or equivalently (X, Y, Z, Y, U, V) where (X,Y,Z) defines the spatial location of a point in a 3D space and (R,G,B) or (Y,U,V) defines a color of this point.

In the following the term "point cloud" refers to any point cloud including a colored point cloud.

Colored point clouds may be static or dynamic depending on whether or not the cloud evolves with respect to time. It should be noticed that in case of a dynamic point cloud, the number of points is not constant but, on the contrary, generally evolves with time. A dynamic point cloud is thus a time-ordered list of sets of points.

Practically, colored point clouds may be used for various purposes such as culture heritage/buildings in which objects like statues or buildings are scanned in 3D in order to share the spatial configuration of the object without sending or visiting it. Also, it is a way to ensure preserving the knowledge of the object in case it may be destroyed; for instance, a temple by an earthquake. Such colored point clouds are typically static and huge.

Another use case is in topography and cartography in which, by using 3D representations, maps are not limited to the plane and may include the relief.

Automotive industry and autonomous cars are also domains in which point clouds may be used. Autonomous cars should be able to "probe" their environment to take safe driving decision based on the reality of their immediate neighboring. Typical sensors produce dynamic point clouds that are used by the decision engine. These point clouds are not intended to be viewed by a human being. They are typically small, not necessarily colored, and dynamic with a high frequency of capture. They may have other attributes like the reflectance that is a valuable information correlated to the material of the physical surface of sensed object and may help the decision.

Virtual Reality (VR) and immersive worlds have become a hot topic recently and foreseen by many as the future of 2D flat video. The basic idea is to immerse the viewer in an environment all round him by opposition to standard TV where he can only look at the virtual world in front of him. There are several gradations in the immersivity depending on the freedom of the viewer in the environment. Colored point clouds are a good format candidate to distribute VR worlds. They may be static or dynamic and are typically of averaged size, say no more than a few millions of points at a time.

Point cloud compression will succeed in storing/transmitting 3D objects for immersive worlds only if the size of the bitstream is low enough to allow a practical storage/transmission to the end-user.

It is also crucial to be able to distribute dynamic point clouds to the end-user with a reasonable consumption of bandwidth while maintaining an acceptable (or preferably very good) quality of experience. Similarly to video compression, a good use of temporal correlation is thought to be the crucial element that will lead to efficient compression of dynamic point clouds.

Octree-based encoding is a well-known approach for encoding the geometry of a point cloud. An octree-based structure is obtained for representing the geometry of the point cloud by splitting recursively a cube encompassing the point cloud until the leaf cubes, associated with the leaf nodes of said octree-based structure, contain no more than one point of the point cloud. The spatial locations of the leaf cubes of the octree-based structure thus represent the spatial locations of the points of the point cloud, i.e. its geometry. Increasing the number of leaf cubes increases the precision of the approximation of the geometry of the point cloud and thus the number of points to be encoded.

Therefore, there is a trade-off to be found between obtaining a good representation of the geometry of a point cloud without requiring a high bitrate for encoding the set of points that represents the geometry of said point cloud.

### 4. Summary.

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

Generally speaking, the present principles relates to a method for up-sampling a set of points representing a 3D scene, each point being associated with a node of a regular 3D grid. The method comprises, for each current point associated with a node of said regular 3D grid:
- determining if at least one neighbor point is located in a neighborhood of a current point of said set of points;
- for each of said at least one neighbor point, determining a new point located at the middle of a segment joining said current point and said neighbor point.

Up-sampling a set of points is especially advantageous when these points are encoded because up-sampling the set of points increases the precision (resolution) level of this set of points without increasing the cost for encoding said set of points. Only the set of points are encoded and not the new points which may be added at the decoding side.

According to an embodiment, the size of the step of said regular 3D grid defines a precision level of the set of points, the set of points is recursively up-sampled up to an expected precision level, at each iteration the precision level is increased by 1 and new points created during a current iteration are added to the set of points to be up-sampled at the following iteration.

This embodiment is advantageous when the difference between the precision level of the set of points and the expected precision level is greater than 1.

According to an embodiment, said regular 3D grid being defined from three orthonormal axes, the neighborhood of a current point (Pᵢ) comprises thirteen neighbor nodes of the regular 3D grid, three of said thirteen neighbor nodes are located along said axes starting from the current point (Pᵢ), six of said thirteen neighbor points are points along small diagonal starting from the current point (Pᵢ), and four of said thirteen neighbor nodes are located along long diagonal starting from the current point (Pᵢ).

According to an embodiment, the set of points represents the geometry of a point cloud.

According to an embodiment at least one point of the set of points is a point in a leaf cube associated with a leaf node of an octree-based structure approximating the geometry of the point cloud.

According to another of their aspects, the present principles relate to a device comprising means for implementing the above method and a non-transitory processor-readable medium having stored thereon instructions to execute the steps of the above method when this program is executed on a computer.

The specific nature of the present principles as well as other objects, advantages, features and uses of the present principles will become evident from the following description of examples taken in conjunction with the accompanying drawings.

### 5. Brief Description of Drawings.

In the drawings, examples of the present principles are illustrated. It shows:
- **Fig.** 1 illustrates an example of an octree-based structure;
- **Fig.** 2 shows schematically a diagram of the steps of the method for up-sampling a set of points representing a 3D scene, each point being associated with a node of a regular 3D grid in accordance with an example of the present principles;
- **Figs. 3a****-b** illustrate the up-sampling in accordance with an example of the present principles;
- **Fig. 4** illustrates a variant of the method of **Fig. 2** in accordance with an example of the present principles; and
- **Fig. 5** shows an example of an architecture of a device in accordance with an example of present principles.

Similar or same elements are referenced with the same reference numbers.

### 6. Description of Example of the present principles.

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims.

While not explicitly described, the present examples and variants may be employed in any combination or sub-combination.

The present principles are described for encoding/decoding the colors of a point cloud but extends to the encoding/decoding of the colors of a sequence of point clouds because each point cloud of the sequence is sequentially encoded/decoded as described below.

In the following, an image contains one or several arrays of samples (pixel values) in a specific image/video format which specifies all information relative to the pixel values of an image (or a video) and all information which may be used by a display and/or any other device to visualize and/or decode an image (or video) for example. An image comprises at least one component, in the shape of a first array of samples, usually a luma (or luminance) component, and, possibly, at least one other component, in the shape of at least one other array of samples, usually a color component. Or, equivalently, the same information may also be represented by a set of arrays of color samples, such as the traditional tri-chromatic RGB representation.

A pixel value is represented by a vector of **nv** values, where **nv** is the number of components. Each value of a vector is represented with a number of bits which defines a maximal dynamic range of the pixel values.

An octree-based structure comprises a root node, at least one leaf node and possibly intermediate nodes. A leaf node is a node of the octree-based structure which has no child. All other nodes have children. Each node of an octree-based structure is associated with a cube. Thus, an octree-based structure comprises a set of at least one cube associated with node(s).

A leaf cube is a cube associated with a leaf node of an octree-based structure.

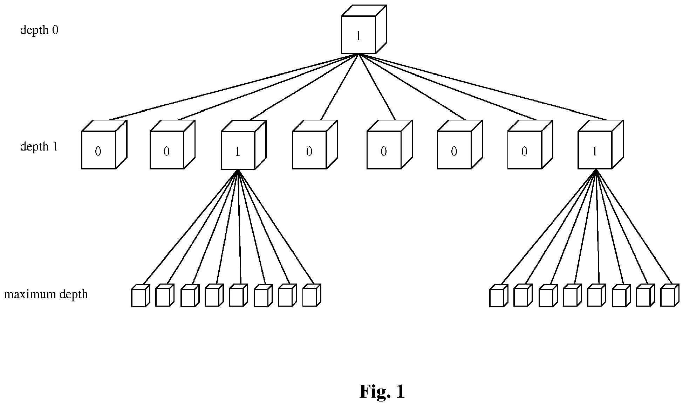

In the example illustrated on **Fig. 1****,** the cube associated with the root node (depth 0) is split into 8 sub-cubes (depth 1) and two sub-cubes of depth 1 are then split into 8 sub-cubes (last depth = maximum depth = 2).

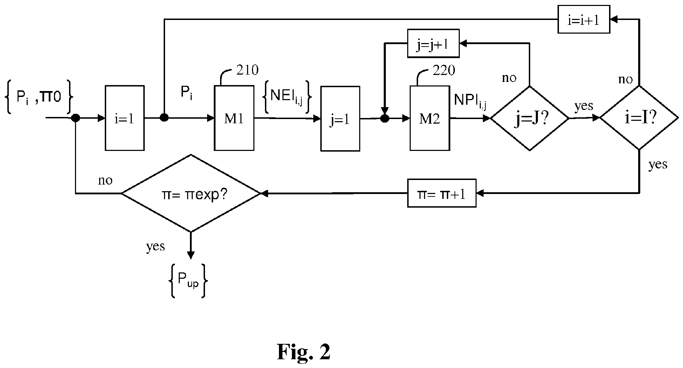

**Fig. 2** shows schematically a diagram of the steps of the method for up-sampling a set of points Pᵢ representing a 3D scene.

The points Pi are located on nodes of a regular 3D grid.

A regular 3D grid may be defined by three basis vectors forming a basis of a real 3D vector space and an origin point. The nodes of the 3D grid are located at positions obtained by translations of the origin point, said translations being performed by vectors which are the sum of the three basis vectors weighted by integers. In case the three basis vectors have the same length, this same length defines the size of the step of the regular 3D grid and a precision level π₀ of the set of points Pᵢ.

For each point Pᵢ associated with a node of said regular 3D grid, in step 210, a module M1 determines if at least one neighbor point NEI_{i,j} is located in a neighborhood of the point Pᵢ, and for each of said at least one neighbor point NEI_{i,j}, in step 220, a module M2 determines a new point NP_{i,j} located at the middle of a segment joining said point Pᵢ and said neighbor point NEI_{i,j}.

The new points NP_{i,j} are added to the set of points Pᵢ.

According to an embodiment, the set of points Pᵢ is recursively up-sampled up to an expected precision level πₑₓₚ, at each iteration the precision level π increases by 1 and the new points NP_{i,j} are added to the set of points Pᵢ to be up-sampled at the following iteration.

The up-sampled points Pᵤₚ are the points Pᵢ of the set of points obtained after the last iteration.

According to an embodiment, said regular 3D grid is defined from three orthonormal axes, the neighborhood of a current point Pᵢ comprises thirteen neighbor nodes of the regular 3D grid, three of said thirteen neighbor nodes are located along said axes starting from the current point Pᵢ, six of said thirteen neighbor points are points along small diagonal starting from the current point Pᵢ, and four of said thirteen neighbor nodes are located along long diagonal starting from the current point Pᵢ.

According to an embodiment, at least one point Pᵢ is a point in a leaf cube associated with a leaf node of an octree-based structure approximating the geometry of the point cloud.

For example, a point Pᵢ is located at the center of a leaf cube Cᵢ itself associated with a leaf node Nᵢ at the maximum depth level δ. Assuming that all cubes of a same depth have a same size, the points Pᵢ are positioned on a regular 3D grid of step the size of the cube of maximum depth level δ. The points Pᵢ of this grid are said to be of precision level π=δ.

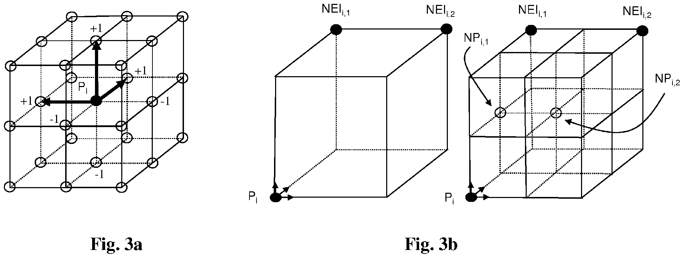

**Figs. 3a****-b** illustrate the determination of neighbor points NEI_{i,j} and new point NP_{i,j}.

In **Fig. 3a****,** is represented all possible neighboring points (white circles) of a point Pᵢ (black point). The regular 3D grid represented on the figure is of precision level π as the precision level of the grid of the point Pᵢ is π.

The neighborhood of this point Pᵢ is defined, according to an embodiment, by adding the values +S, 0 or -S to at least one of the coordinates of the point Pᵢ, where S is the step of the regular 3D grid of precision level π. S=1 for the example illustrated on **Fig. 3a** in case of three orthonormal basis vectors (of length 1) defining the 3D grid. Then, the point Pᵢ may have at most 26 neighbor points represented by circles.

In **Fig. 3b****,** is represented an example wherein the point Pᵢ has two neighbor points NEI_{i,1} and NEI_{i,2}. A new point NP_{i,1} is added at the middle of a segment defined by the points Pᵢ and NEI_{i,1}, and a new point NP_{i,2} is added at the middle of a segment defined by the points Pᵢ and NEI_{i,2}. The new grid illustrated on **Fig. 3b** (right) is of precision level π+1, i.e. has a step half the step of the grid of precision level π illustrated on **Fig. 3b** (left).

The present principles are not limited to this example but may extend to any other method for defining a neighborhood of the point Pᵢ and to any other method for defining a new point from two existing points located in a neighborhood of the point Pᵢ.

Determining if a neighbor point NEI_{i,j} is located in a neighborhood of the point Pᵢ as described above leads to many couples of points to be tested as illustrated in **Fig. 3a****.**

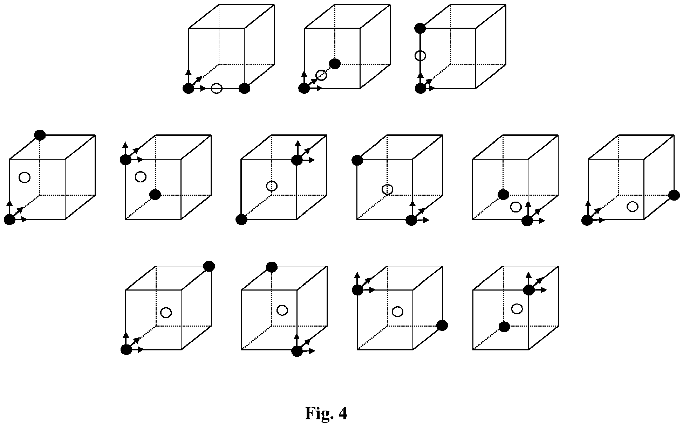

This number of 26 couples of points to be tested may be reduced to 13 according to a variant illustrated in **Fig. 4** where 3 of said 13 couples of points consider neighbor points along segment starting from the point Pᵢ, 6 of said 13 couples of points consider neighbor points along small diagonal starting from the point Pᵢ, and 4 of said 13 couples of points consider the neighbor points along all long diagonal starting from the point Pᵢ.

Said variant avoids thus to check twice the same couple of points, thus the number of 26/2=13 couples to be checked in step 220.

On **Fig. 1-4****,** the modules are functional units, which may or not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the present principles are implemented using either pure hardware, for example using dedicated hardware such ASIC or FPGA or VLSI, respectively « Application Specific Integrated Circuit », « Field-Programmable Gate Array », « Very Large Scale Integration », or from several integrated electronic components embedded in a device or from a blend of hardware and software components.

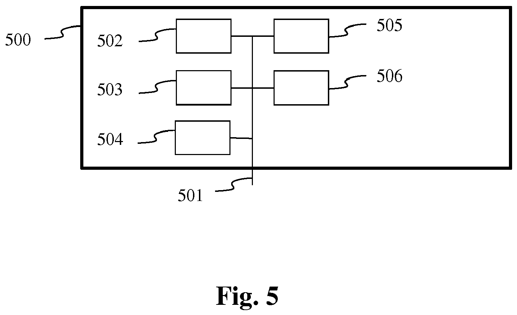

**Fig. 5** represents an exemplary architecture of a device 500 which may be configured to implement a method described in relation with **Fig. 1-4****.**

Device 500 comprises following elements that are linked together by a data and address bus 501:
- a microprocessor 502 (or CPU), which is, for example, a DSP (or Digital Signal Processor);
- a ROM (or Read Only Memory) 503;
- a RAM (or Random Access Memory) 504;
- an I/O interface 905 for reception of data to transmit, from an application; and
- a battery 506.

In accordance with an example, the battery 506 is external to the device. In each of mentioned memory, the word « register » used in the specification can correspond to area of small capacity (some bits) or to very large area (e.g. a whole program or large amount of received or decoded data). The ROM 503 comprises at least a program and parameters. The ROM 503 may store algorithms and instructions to perform techniques in accordance with present principles. When switched on, the CPU 502 uploads the program in the RAM and executes the corresponding instructions.

RAM 504 comprises, in a register, the program executed by the CPU 502 and uploaded after switch on of the device 500, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

In accordance with an example, the set of points representing a 3D scene (point cloud) is obtained from a source. For example, the source belongs to a set comprising:
- a local memory (503 or 504), e.g. a video memory or a RAM (or Random Access Memory), a flash memory, a ROM (or Read Only Memory), a hard disk ;
- a storage interface (505), e.g. an interface with a mass storage, a RAM, a flash memory, a ROM, an optical disc or a magnetic support;
- a communication interface (505), e.g. a wireline interface (for example a bus interface, a wide area network interface, a local area network interface) or a wireless interface (such as a IEEE 802.11 interface or a Bluetooth® interface); and
- an image capturing circuit (e.g. a sensor such as, for example, a CCD (or Charge-Coupled Device) or CMOS (or Complementary Metal-Oxide-Semiconductor)).

In accordance with an example, the up-sampled set of points is sent to a destination; specifically, the destination belongs to a set comprising:
- a local memory (503 or 504), e.g. a video memory or a RAM, a flash memory, a hard disk ;
- a storage interface (505), e.g. an interface with a mass storage, a RAM, a flash memory, a ROM, an optical disc or a magnetic support;
- a communication interface (505), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi ® or a Bluetooth ® interface);
- a rendering device; and
- a display.

In accordance with examples, device 500 being configured to implement an encoding method described in relation with **Fig. 1-4****,** belongs to a set comprising:
- a mobile device ;
- a smartphone or a TV set with 3D capture capability
- a communication device ;
- a game device ;
- a tablet (or tablet computer) ;
- a laptop ;
- a still imagecamera;
- a video camera ;
- an encoding chip;
- a still image server; and
- a video server (e.g. a broadcast server, a video-on-demand server or a web server);
- a Head Mounted Display (HMD)
- (mixed reality) smartglasses
- an holographic device
- a set top box;
- a TV set;
- a display
- a sterescopic display and
- a decoding chip.

Implementations of the various processes and features described herein may be embodied in a variety of different equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, a HMD, smart glasses, and any other device for processing an image or a video or other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described example of the present principles, or to carry as data the actual syntax-values written by a described example of the present principles. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method for up-sampling a set of points representing a 3D scene, each point being associated with a node of a regular 3D grid, **characterized in that** the method comprises, for each current point (Pᵢ) associated with a node of said regular 3D grid:
- determining (210) if at least one neighbor point (NEI_{i,j}) is located in a neighborhood of a current point (Pᵢ) of said set of points;
- for each of said at least one neighbor point (NEI_{i,j}), determining a new point (NP_{i,j}) located at the middle of a segment joining said current point (Pᵢ) and said neighbor point (NEI_{i,j}).

2. A device for up-sampling a set of points representing a 3D scene, each point being associated with a node of a regular 3D grid, **characterized in that** the method comprises, for each current point (Pᵢ) associated with a node of said regular 3D grid:
- determining if at least one neighbor point (NEI_{i,j}) is located in a neighborhood of a current point (Pᵢ) of said set of points;
- for each of said at least one neighbor point (NEI_{i,j}), determining a new point (NP_{i,j}) located at the middle of a segment joining said current point (Pᵢ) and said neighbor point (NEI_{i,j}).

3. The method of claim 1 or the device of claim 2, wherein the size of the step of said regular 3D grid defines a precision level of the set of points, the set of points is recursively up-sampled up to an expected precision level, at each iteration the precision level is increased by 1 and new points created during a current iteration are added to the set of points to be up-sampled at the following iteration.

4. The method of one of the claim 1 or 3 or the device of one of the claims 2 or 3, wherein said regular 3D grid being defined from three orthonormal axes, the neighborhood of a current point (Pᵢ) comprises thirteen neighbor nodes of the regular 3D grid, three of said thirteen neighbor nodes are located along said axes starting from the current point (Pᵢ), six of said thirteen neighbor points are points along small diagonal starting from the current point (Pᵢ), and four of said thirteen neighbor nodes are located along long diagonal starting from the current point (Pᵢ).

5. The method of one of the claims 1, 3-4 or device of one of the claims 2-4, wherein the set of points represents the geometry of a point cloud.

6. The method of one of the claims 1, 3-5 or device of one of the claims 2-5, wherein at least one point of the set of points is a point (Pᵢ) in a leaf cube associated with a leaf node of an octree-based structure approximating the geometry of the point cloud.

7. A non-transitory processor-readable medium having stored thereon instructions to execute the steps of a method according to one of claims 1, 3-6 when this program is executed on a computer.
